# EUROPÄISCHE PATENTSCHRIFT

(11) **EP 0 982 091 B1**
(45) Veröffentlichungstag und Bekanntmachung des Hinweises auf die Patenterteilung: **13.10.2004**
(21) Anmeldenummer: 99116995.4
(22) Anmeldetag: 28.08.1999
(51) Int. Cl.: B23D 57/00, B24B 27/06

(54) **Verfahren und Vorrichtung zum Zerlegen von Gegenständen**
Method and device for cutting up objects
Procédé et dispostif pour la découpe de pièces

(30) Priorität: 28.08.1998 DE 19839045
(43) Veröffentlichungstag der Anmeldung: 01.03.2000
(73) Patentinhaber: RWE NUKEM GmbH, 63755 Alzenau (DE)
(72) Erfinder: Arnold, Hans Uwe, 63755 Alzenau (DE); Christ, Bernhard, Dr., 65428 Rüsselsheim (DE); Ledebrink, Friedrich-W., Dr., 63543 Neuberg (DE)
(74) Vertreter: Stoffregen, Hans-Herbert, Dr. Dipl.-Phys.

(56) Entgegenhaltungen:
- EP-A- 0 674 323
- DE-A- 2 142 002
- FR-A- 2 457 755
- US-A- 4 702 138

## Beschreibung

Die Erfindung bezieht sich auf ein Verfahren zum Zerlegen von Gegenständen mittels eines flexiblen Schleifelementes wie -draht, -seil oder einer -litze. Schließlich nimmt die Erfindung Bezug auf eine Vorrichtung zum Zerlegen eines Gegenstandes mittels eines flexiblen Schleifelementes wie -drahts, -seils oder einer -litze.

Um kontaminierte Gegenstände wie z. B. Handschuhkästen oder radioaktiv kontaminierte Wärmetauscher zu entsorgen, ist es bekannt, diese aus meist beengten Aufstellungsbereichen zu entfernen und sodann entweder unzerlegt zu verpacken oder zu einem speziell eingerichteten Zerlegeplatz zu transportieren und dort zu zerlegen. Ein Zerlegen auf verpackungsgerechte Größe wird bevorzugt, um den Füllgrad der zum Einsatz gelangenden und üblicherweise standardisierten Endlagercontainer zu erhöhen. Während des Zerlegeprozesses werden verfahrensbedingt erhebliche Mengen zum Teil gefährlicher Stoffe freigesetzt. Im Falle der Zerlegung von mit Plutonium kontaminierten Handschuhkästen sind daher in der Regel aufwendige Einrichtungen eines speziellen sicheren Arbeitsraumes (Caisson, Alpha-Zelle) erforderlich.

Um diesen Aufwand zu reduzieren, wird nach der WO 97/30457 ein Verfahren vorgeschlagen, bei dem im Inneren der zu entsorgenden Gegenstände vorhandene gefährliche Stoffe an einer Freisetzung dadurch gehindert werden, dass die Gegenstände mit aushärtendem Material ausgeschäumt werden. Im Falle einer Zerlegung sind diese Stoffe im Bereich der Schnittfläche fixiert. Der zusätzliche Füllstoff dient gleichzeitig zur Fixierung der Einbauten für die nachfolgende mechanische Zerlegung.

Auch ist es bekannt, zu zerlegende Gegenstände in einen Eisblock einzufrieren, um anschließend den Eisblock mit den eingefrorenen Bauteilen zu zersägen (EP 0 327 841 B1).

Nach der DE 39 40 691 A1 werden Gegenstände mit Hilfe eines Schleifdrahtes zerlegt, wobei sich eine sich ändernde Schnittlinie derart ergibt, dass im Wesentlichen ein punktueller Angriff auf den zu zerlegenden Gegenstand erfolgt. Die sich ändernde Schnittlinie wird dadurch erreicht, dass die den Schleifdraht führenden Rollen im festen Abstand zueinander in einem Drehglied gelagert werden, welches in eine Schwenkbewegung um eine feste Achse versetzt werden muss, um die Schnittlinie zu verändern.

Die DE 40 27 156 A1 sieht eine Schneideeinrichtung in Form einer Bügel-, Kreis- oder Stichsäge vor, die horizontale und vertikale Bewegungen ausüben kann.

Nach der DE 695 01 171 T2 können beim Zerlegen freigesetzte Partikel mittels eines Bindemittels in Form eines Gels fixiert werden

Während die Verpackung von Gegenständen ohne verpackungsgerechte Vorzerlegung zu unvollständig gefüllten Endlagercontainern und damit zu einer unwirtschaftlichen Nutzung des beanspruchten Endlagervolumens führt, erfordert das endlagergerechte Vorzerlegen häufige Transportvorgänge zum Zerlegeplatz. Dabei sind ggf. zusätzliche Vorkehrungen gegen eine Rückkontamination bereits geräumter Bereiche erforderlich. Im Falle des Transports von z. B. plutoniumkontaminierten Handschuhkästen sind hierzu äußerst aufwendige Maßnahmen erforderlich.

Unabhängig davon stößt das verpackungsgerechte Zerlegen von Gegenständen häufig auf durch die Praxis bedingte Grenzen, da die für eine optimale Verpackung sich ergebende Schnittführung häufig durch heterogene Querschnitte von Gegenständen geführt werden muss. So müssen z. B. in Dampferzeugern Schnitte durch Rohrbündel mit zum Teil federnden Abstandshaltern oder in Handschuhkästen durch Motoren, gehärtete Führungsschienen, Kettenförderer, Bleiglasfenster oder ähnliches verlaufen. Hierdurch bedingt können eine Vielzahl von Spezialwerkzeugen erforderlich sein, um die vorhandenen Werkstoffe und Querschnitte zuverlässig trennen zu können. Dabei ist zu berücksichtigen, dass entsprechende Spezialwerkzeuge nach einer erfolgten Kontamination mit Plutonium nicht oder nur unter besonderen Bedingungen wiedereinsetzbar sind.

Um hier Abhilfe zu schaffen, können Universalwerkzeuge wie Bandsägen benutzt werden, die jedoch für die meisten Anwendungsfälle überdimensioniert sind.

Aber auch dann, wenn durch ein vorausgehendes Freiräumen des geplanten Schnittbereichs der Einsatz bzw. der Umfang der notwendigen Spezialwerkzeuge reduziert werden kann, sind ungeachtet dessen aufwendige Vorkehrungen gegen eine Freisetzung von Kontaminationen bzw. Dosisbelastungen des Bedienungspersonals erforderlich.

Das dem Stand der Technik zu entnehmende Vereisen von Gegenständen erfordert einen hohen Energieaufwand beim Einfrieren bzw. beim definierten Auftauen der geschnittenen Teile und ist zudem für viele Anwendungsfälle ungeeignet.

Sofern mittels organischer Hartstoffe Kontaminationen gebunden bzw. Einbauten in Gegenständen fixiert werden sollen, tritt beim Zerlegen der Gegenstände in einer durch den gut isolierenden Schaum führenden Schnittstelle eine unerwünschte Temperaturerhöhung auf, die zur Pyrolyse oder Entzündung und damit zur Freisetzung von Kontaminationen führen kann. Diese Nachteile können dadurch behoben werden, dass eine zusätzliche Werkzeugkühlung vorgesehen ist, z. B. durch verdampfendes Inertgas.

Eine Vereinfachung des Zerlegens könnte dann erfolgen, wenn mit Hartmetall bestückte Sägen zum Einsatz gelangen. Allerdings ist es dann erforderlich, dass die Einbauten der Gegenstände ordnungsgemäß fixiert sind. Auch ist eine möglichst rechtwinklige Anordnung zur Schnittebene erforderlich, was in der Praxis zu Schwierigkeiten führt. Daher ist immer wieder festzustellen, dass bei Bandsägen Hartmetallzähne ausbrechen, so dass es zu einer Wiederholung des Schneidvorganges mit einem gesamt neuen Schnitt kommen muss, sofern herausgebrochene Hartmetallzähne nicht aus der Schnittfuge entfernbar sind. Es bestünde auch die Möglichkeit, mittels gewöhnlicher Seilsägen Einbauten von Gegenständen zu zerlegen, sofern für diamantbeschichtete, auf dem Seil vorhandene Schleifkörper die Möglichkeit des Freischleifens zur Verfügung stände, z. B. durch zusätzlich in den Schnittbereich eingelegte Betonkörper. Um jedoch die Häufigkeit des Verhakens der Schleifkörper an scharfen Kanten zu reduzieren, muss dabei mit hoher Seilgeschwindigkeit geschnitten werden. Hierdurch erwächst jedoch das Problem eines möglichen Seilrisses sowie einer starken thermischen Belastung der Einbauten, so dass größere Mengen an sodann kontaminiertem Kühlwasser anfallen. Zusätzlich können durch ein rücklaufendes Seil bzw. Sägeband radioaktive Aerosole verbreitet werden. Dies wiederum bedeutet, dass zur Vermeidung einer Kontaminationsausbreitung der freilaufende Werkzeugteil sowie der gesamte Arbeitsbereich lüfungstechnisch abgeschottet werden muss. Somit ist ein hoher Platzbedarf für z. B. für die Seilführung notwendige Umlenkrollen erforderlich. Alternativ müsste man Kompromisse bei der Schnittführung eingehen.

Aus der US 4,702,138 ist ein Verfahren zum Schneiden eines Keramikgrünkörpers bekannt. Hierzu wird ein Schleifdraht um Umlenkrollen geführt, die in Richtung des Grünkörpers zugestellt werden. Über die nahezu gesamte Zerlegedauer ändert sich die Richtung der Schnittlinie des Schleifdrahtes

Die DE-A-2 142 002 bezieht sich auf eine Schneidvorrichtung, bei der ein Schleifdraht derart geführt wird, dass Bindung des Angriffswinkels in Bezug auf einen zu zerlegenden Gegenstand nicht verändert werden.

Der vorliegenden Erfindung liegt das Problem zugrunde, ein Verfahren und eine Vorrichtung der eingangs genannten Art so weiterzubilden, dass durch eine einfach handzuhabende Zerlegeeinrichtung und unter Verzicht von raumgreifenden Einrichtungen eine verpackungsgerechte in-situ-Zerlegung auf engstem Raum möglich wird. Dabei soll gleichzeitig sichergestellt werden, dass eine geringe und leicht handhabbare Dosis- bzw. Kontaminationsbelastung auftritt.

Zurlösung des Problems wird vorgeschlagen ein Verfahren zum Zerlegen eines Gegenstandes mittels eines flexiblen Schleifelementes wie - drahts, -seils oder einer -litze, wobei das Schleifelement von zwei Fixpunkten, von denen jeweils eines von einem - einem ersten und einem zweiten - Antriebsaggregat ausgeht, zwischen denen ein zu zerlegender Bereich der Gegenstände verläuft, und wobei vor Beginn des Zerlegens die Fixpunkte bei gleichsinnig in einer Endlage sich befindenden Antriebsaggregaten einen Abstand X Meiner als das Schleifelement in seiner tatsächlichen Länge X + Xₛ zwischen den Fixpunkten aufweisen, das folgende Verfahrensschritte umfasst:
A) Anordnen der Fixpunkte der Antriebsaggregate außerhalb des Gegenstandes derart, dass das Schleifelement in Ausgriff mit dem Gegenstand ist,
B) Fixieren des ersten Antriebsaggregats und Bewegen des zweiten Antriebsaggregats bei gleichzeitiger oszillierender Schleifbewegung des Schleifelementes in Richtung des Gegenstandes zum Ausbilden einer Fuge in diesem,
C) bei Erreichen eines Abstandes zwischen den Fixpunkten der zwei Antriebsaggregate derart, dass ein wirksames Oszillieren des Schleifelementes unterbunden ist, Beabstanden des zuvor in Richtung des Gegenstandes bewegten zweiten Aggregats zur Schleiflinie, Fixieren des zweiten Antriebsaggregats und Bewegen des ersten Antriebsaggregats in Richtung der Schleiflinie bei gleichzeitiger oszillierender Bewegung des Schleifelementes,
D) bei erneutem Erreichen des Abstandes zwischen den Fixpunkten der Antriebsaggregate derart, dass ein wirksames Oszillieren des Schleifelementes unterbunden ist, Beabstanden des zuvor in Richtung des Gegenstandes bewegten ersten Antriebsaggregats zur Schleiflinie, Fixieren des ersten Antriebsaggregats und Bewegen des zweiten Antriebsaggregats in Richtung der Schleiflinie bei gleichzeitiger oszillierender Bewegung des Schleifelementes und
E) Fortführen der Verfahrensschritte C) und D) bis zum gewünschten Zerlegen des Gegenstandes.

Dabei sind insbesondere die Antriebsaggregate entlang parallel zueinander verlaufender Führungen bewegbar. Wie die Führungen verlaufen, ist dabei unbeachtlich.

Bei den Antriebsaggregaten handelt es sich vorzugsweise um Kolbenzylindereinheiten, wobei bei den oszillierenden Bewegungen eines der Antriebsaggregate als Arbeitszylinder und das andere Antriebsaggregat als Spannzylinder wirkt, wobei ein Wechseln der Funktion nach jedem Hub erfolgt.

Eine unmittelbare Verbindung zwischen den Antriebsaggregaten ist dabei nicht erforderlich, so dass eine Positionierung in unterschiedlichen Räumen möglich ist. Dies zeigt insbesondere bei der Zerlegung von Handschuhkästen Vorteile, die direkt an Gebäudewänden aufgestellt sind.

Das erfindungsgemäße Verfahren bedingt keine Parallelität zwischen den Führungen zur Schnittebene bzw. rechtwinklig zu dieser. Hierdurch bedingt wird die Aufstellung der Führungen im Arbeitsbereich einfacher und die Aufenthaltsdauer von Umrüst- und Abnahmepersonal im Strahlenbereich reduziert.

Bezüglich des Wechsels der in Richtung der Schnitt- oder Zerlegelinie verstellbaren Antriebsaggregate ist anzumerken, dass ein Umstellen selbstverständlich auch bereits dann erfolgen kann, wenn die oszillierende, also Hin- und Herbewegung des Schleifelementes zum Zerlegen des Gegenstandes noch wirksam ist. Das Wechseln des zu verstellenden Antriebsaggregates in Richtung der Trennlinie kann in Abhängigkeit der tatsächlichen Länge des Hubs zumindest einer der Kolben gesteuert werden, wobei der Hub selbst über Endschalter erfasst werden kann.

Erfindungsgemäß wird ein Verfahren zur endlagergergchten in-situ-Zerlegung von Gegenständen mit und ohne Einbauten wie z. B. mit Plutonium kontaminierten Handschuhkästen oder auch radioaktiv kontaminierten Wärmetauschern unter weitestgehender Vermeidung von Kontaminationsverschleppung durch Anwendung eines oszillierenden Schleifwerkzeuges wie -draht, -litze oder -seil vorgeschlagen, welches derart geführt wird, dass die Zustellkraftwirkungen derart vom Zerlegefortschritt abhängig sind, dass auch Gegenstände mit komplexen Einbauten aus unterschiedlichen Werkstoffen problemlos zerlegbar sind, wobei Hauptaugenmerk auf die Durchführbarkeit bzw. Zuverlässigkeit des Zerlegeverfahrens und nicht auf die reproduzierbare Zerlegezeit gerichtet wird. Durch die oszillierende Bewegung der Zerlegeeinrichtung wie Schleifdraht erfolgt eine grundsätzlich fortwährende und automatisch erfolgende Änderung der Zustellkraftwirkungen vom Betrag und Richtung her, so dass ein Verklemmen vermieden wird. Hierzu wird der zu zerlegende Gegenstand abwechselnd von in Bezug auf die Schnittlinie unterschiedlichen Seiten her bearbeitet, d. h. der Gegenstand wird zunächst an einer Seite geschnitten, um sodann nach Erreichen einer bestimmten Schnitttiefe eine Entlastung vorzunehmen, während der die Zerlegeeinrichtung wie Schleifdraht in der Schnittfuge verbleibt, um sodann von der anderen Seite des Gegenstandes ausgehend den Zerlege-, d. h. Schleifprozess fortzuführen, wodurch lange, durchgängige Schnittbereiche über große Flächen vermieden werden und bei der Verwendung eines Schleifdrahts bei gleicher Drahtspannung eine effizientere Wirkung erfolgt.

Gegenüber bekannten Zerlegeverfahren ist ein geringer Platzbedarf erforderlich, so dass grundsätzlich eine vorteilhafte in-situ-Zerlegung ermöglicht wird.

Dadurch, dass eine oszillierende Bewegung der Zerlegeeinrichtung wie Schleifdraht erfolgt, entfällt die durch einen freien Rücklauf eines Endloswerkzeuges typische Arbeitsschutz- bzw. Aerosol-Problematik.

Bei der Verwendung eines relativ dünnen Schleifdrahtes reduziert sich ein Sekundär-Abfallaufkommen. Verschlissene Schleifdrähte nehmen praktisch kein zusätzliches Endlagervolumen in Anspruch, da diese selbst in einem bereits gefüllten Endlagercontainer Platz finden.

Das auf Schleifen basierende Zerlegeverfahren hat gegenüber Trennverfahren mit definierter Schneide wie Säge den Vorteil, dass für jeden Anwendungsfall diverse Kornanteile mit optimaler Schneidenform vorhanden sind, so dass Werkstoffe aus Kunststoff, Stahl, Messing, Aluminium oder Bleiglas sowie Kombinationen dieser mit demselben Schleifdraht gleichzeitig zerlegt werden können.

Ohne die Erfindung zu verlassen, besteht selbstverständlich auch die Möglichkeit, einen z. B. dickwandigen bzw. aus einem einzigen Werkstoff bestehenden Außenbereich eines zu zerlegenden Gegenstandes wie Dampferzeuger mit einem dafür besonders geeigneten Verfahren z. B. durch Fräsen oder Sägen bzw. bei dickwandigen Gegenständen auch durch Kryo-Sprödbruchtrennen zumindest teilweise zu öffnen und erst anschließend mit dem erfindungsgemäßen Verfahren die Einbauten sukzessiv zu zerlegen.

Um beim Zerlegen ein Freisetzen von kontaminierten Materialien weitgehend auszuschließen, sieht eine Weiterbildung der Erfindung vor, dass entlang von der Schnittlinie durchsetzter Schnittebene ein beim Zerlegen des Gegenstandes freigesetzte Partikel bindendes Material wie gelartiges Bindemittel aufgebracht wird. Auch besteht die Möglichkeit, dass von der Schnittlinie ausgehende Schnittfuge während des Zerlegens mit einem freigesetzte Partikel bindendes Material enthaltenden Gas wie Bindemittel-Aerosol oder -nebel beaufschlagt wird. Dabei kann eine Beaufschlagung der Schnittfuge bzw. der diese begrenzenden Schnittflächen mittels des Gases elektrostatisch unterstützt werden Ergänzend kann der Niederschlag von dem Gas durch Nasskondensation durch Kühlen der Fuge bzw. des diesen umgebenden Bereichs unterstützt werden.

Eine Vorrichtung zum Zerlegen eines Gegenstandes mittels eines flexiblen Schleifelementes wie -drahts, -seils oder einer -litze zeichnet sich dadurch aus, dass die Vorrichtung zwei Kolben-Zylinderanordnungen umfasst, dass jede Kolben-Zylinderanordnung entlang einer Führung verstellbar ist, dass zwischen den Führungen der zu zerlegende Gegenstand positioniert ist, dass jeder Kolben einen Fixpunkt für das Schleifelement aufweist, dass die Kolben beim Zerlegen des Gegenstandes gleichsinnig verstellbar sind, wobei die eine Kolben-Zylinderanordnung bei einem Kolbenhub als Arbeitszylinder und die andere Kolben-Zylinderanordnung als Spannzylinder und nachfolgendem Kolbenhub als Spannzylinder bzw. Arbeitszylinder wirkt, dass die Fixpunkte bei gleichsinnig in ihrer jeweiligen Endlage (Totpunkt) angeordneten Kolben und Ausgriff des Schleifelementes mit dem Gegenstand einen Abstand X aufweisen, der kleiner als das Schleifelement in seiner tatsächlichen Länge zwischen den Fixpunkten ist, und dass bei Zerlegen des Gegenstandes einer der Zylinder fixiert und der andere Zylinder in Richtung von dem Schleifelement auszubildender Schnittlinie verstellbar ist und umgekehrt. Dabei verlaufen die Führungen vorzugsweise parallel zueinander, so dass der minimale Abstand der Fixpunkte bei gleichsinnig angeordneten Kolben dem Abstand X entspricht.

Durch das erfindungsgemäße Werkzeugführungsprinzip in Verbindung mit dem oszillierenden Schleifelement wie Schleifdraht kann eine mehrfache Änderung des Schneidrichtung (Konturenschnitt) unter beliebigem Winkel erfolgen ohne dass ein Werkzeugwechsel erforderlich ist. Auch besteht die Möglichkeit, das Schleifelement im Rückhub freizuführen, so dass ein endloser Lauf in einer Richtung simuliert wird. Hierdurch bedingt fällt Fugenmaterial nur an einer Stelle an, wodurch in gewissen Anwendungsfällen Vorteile gegeben sind.

Die Zylinder selbst sind vorzugsweise druckluftbetätigt. Auch können hydraulisch betätigte Zylinder zum Einsatz gelangen. Andere Ausgestaltungen der Antriebsaggregate sind gleichfalls möglich, ohne dass die erfindungsgemäße Lehre verlassen wird. Vielmehr ist ausschlaggebend, dass das Schleifelement beim Zerlegen, also Schleifen eine oszillierende Bewegung durchführt, wobei ein Antriebsaggregat in Richtung der Trennlinie verfahrbar und das andere Antriebsaggregat gleichzeitig fixiert ist, um sodann bei Erreichen eines vorgegebenen minimalen Hubs der Kolben bzw. eines Kolbens, das zuvor bewegte Antriebsaggregat zu fixieren und das andere Antriebsaggregat in Richtung der Schnittlinie zu verstellen. Hierdurch bedingt erfolgt zunächst eine Abstandsverringerung zwischen den Fixpunkten, der nach Durchschreiten des Abstandes X sodann bis zu einem Abstand wieder zunimmt. bei dem durch die Seillänge X + X_{S} bedingt der z. B. mit einem Endschalter ermittelbare minimale Hub festgestellt wird.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung eines der Zeichnung zu entnehmenden bevorzugten Ausführungsbeispiels.

Es zeigen:
- Fig. 1: ein Verfahrensablauf zum Zerlegen eines Gegenstandes wie Handschuhkasten und
- Fig. 2: ein den Verfahrensablauf gemäß Fig. 1 verdeutlichendes Flussdiagramm.

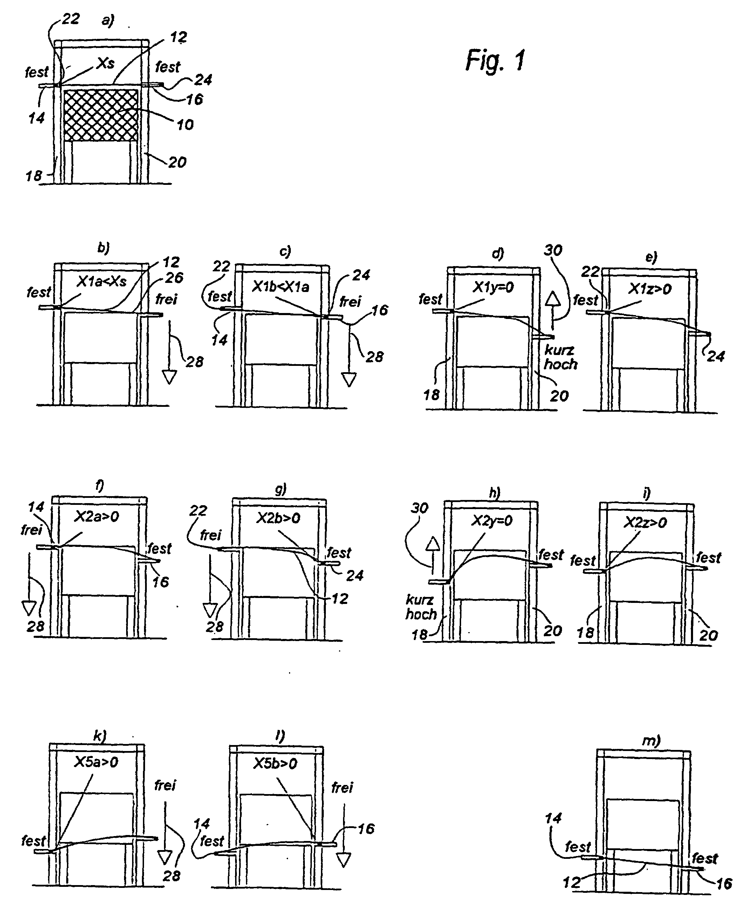

Anhand der Fig. 1 soll das Zerlegen eines Gegenstandes 10 mittels eines flexiblen Schleifelementes in Form eines z. B. Wolfram-Carbid besetzten Schleifdrahtes 12 verdeutlicht werden, der von Kolben-Zylinderanordnungen 14, 16 ausgeht, die entlang von Führungen 18, 20 verschiebbar sind. Dabei verlaufen die Führungen 18, 20 parallel zueinander und sind auf gegenüberliegenden Seiten des Gegenstandes 10 angeordnet.

Der Draht 12 selbst geht von Fixpunkten 22, 24 des innerhalb des Zylinders verschiebbaren Kolbens der Kolben-Zylinderanordnung 14, 16 aus.

In der Startposition (Fig. 1a) befinden sich die Zylinderanordnung 14, 16 oberhalb des Gegenstandes 10 und sind gleichsinnig ausgerichtet. Im Ausführungsbeispiel sind hierzu die Kolben der Kolben-Zylinderanordnung 14, 16 nach rechts verschoben, so dass sich entsprechend die Fixpunkte 22, 24 in ihrer jeweiligen rechten Endlage befinden. Der Abstand zwischen dem Fixpunkt 22, 24 bei sich in gleichsinniger Totpunktlage befindenden Kolben beträgt X. Demgegenüber ist die Länge des Drahtes 12 zwischen den Fixpunkten 14, 16 X + X_{S}.

Beim Trennvorgang selbst wirken die Kolben-Zylinderanordnungen 14, 16 abwechselnd als Arbeitszylinder (AZ) bzw. Spannzylinder (SZ), wodurch der Schleifdraht 12 eine oszillierende Bewegung ausübt. Dadurch, dass der Draht 12 im Ausgangszustand gegenüber dem lichten Abstand der Fixpunkte 22, 24 um den Betrag X_{S} länger ist, hat bei gespanntem Draht 12 der zukünftige Arbeitszylinder (AZ) einen Wegvorsprung, um den Betrag X_{S} bzw. einen um diesen Betrag eingeschränkten Hub, während der andere sodann als Spannzylinder (SZ) wirkende Zylinder sich noch am äußeren Totpunkt befindet.

Mit anderen Worten bewegt sich der Kolben der Kolben-Zylinderanordnung 14 nach links, um den Draht 12 zu spannen, ohne dass der Fixpunkt 24, der von dem Kolben der Kolben-Zylinderanordnung 16 ausgeht, bewegt wird. Hierdurch bedingt besteht die Möglichkeit, den Gegenstand 10 entsprechend der zeichnerischen Darstellungen wechselseitig schräg anzuschneiden, wobei gleichzeitig auf einfache Weise ein Steuersignal generierbar ist. Hierzu wird im Ausführungsbeispiel die Kolben-Zylinderanordnung 14 über eine nicht dargestellte Halterung an der Führung 18 fixiert, wohingegen die Kolben-Zylinderanordnung 16 entlang der Führung 20 in Richtung der auszubildenden Trennlinie in dem Gegenstand 10 verstellbar ist (Pfeil 28). Somit beginnt der Draht 12 den Gegenstand 10 in seinem rechten Randbereich 26 zu durchtrennen. Da der Abstand zwischen den Kolben-Zylinderanordnungen 14, 16 mit zunehmender Bewegung der Kolben-Zylinderanordnung 16 zum Boden des Gegenstandes 10 hin vergrößert wird, wird der Hub der Kolben der Kolben-Zylinderanordnungen 14, 16 reduziert. Bei Erreichen eines vorgegebenen minimalen Hubs (dieser Zustand ist in der Fig. 1d dargestellt) wird ein Steuersignal ausgelöst und sodann die Kolben-Zylinderanordnung 16 mittels der nicht dargestellten Halterung entlang der Führung 20 angehoben (Pfeil 30), so dass sich eine Abstandsverkürzung zwischen den Fixpunkten 22, 24 ergibt. Sodann wird die Kolben-Zylinderanordnung 16 fixiert (Fig. 1e), um entsprechend zuvor beschriebener Verfahrensweise die Kolben-Zylinderanordnung 14 entlang der Führung 18 in Richtung des Gegenstandes 10 zu verfahren, wobei der Draht 12 gleichzeitig eine oszillierende Bewegung durchführt. Diese Handhabung wird anhand der Fig. 1e bis 1g verdeutlicht.

Sobald aufgrund des Verlaufes des Drahtes 12 zwischen den Fixpunkten 22, 24 und durch der aufgrund der Positionierung der Kolben-Zylinderanordnung 14, 16 zueinander und des Bewegens des Drahts 12 entlang der Schnittlinie erfolgten scheinbaren Verkürzung des erfolgten Drahtes 12 wird aufgrund der eingeschränkten Hubbewegung eine oszillierende Bewegung nicht oder nicht mehr wirksam möglich, so dass erneut ein Signal generiert wird, wodurch nunmehr die Kolben-Zylinderanordnung 14 entsprechend dem Pfeil 30 angehoben und anschließend fixiert wird (Fig. 1h), um entsprechend des Verfahrensablaufs der Fig. 1b bis 1d die Kolben-Zylinderanordnung 18 entlang der Führung 16 abzusenken (Fig. 1k, 1l) bis der Gegenstand 10 entlang einer Schnittfläche durchtrennt ist (Fig. 1m).

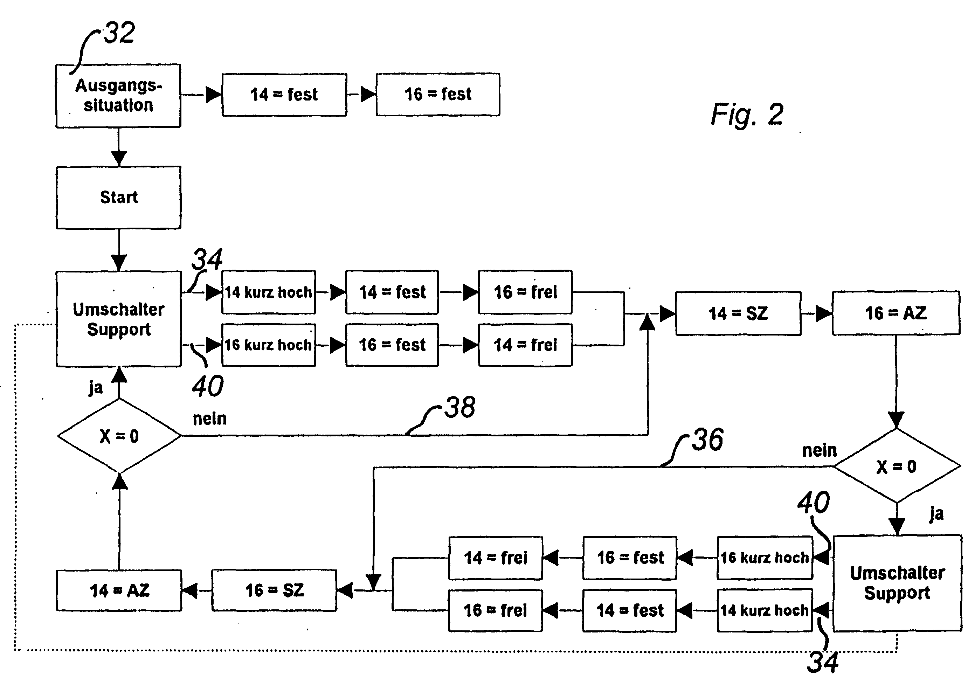

Das zuvor beschriebene Verfahren wird auch anhand des Flussdiagramms gemäß Fig. 2 verdeutlicht.

So ist in der Ausgangsposition 32 die Kolben-Zylinderanordnung 14 und die Kolben-Zylinderanordnung 16 an der jeweiligen Führung 18, 20 fixiert.

Dabei ist der Abstand der Fixpunkte 22, 24 zwischen den gleichsinnig ausgerichteten Kolben in ihren jeweiligen Endlagen kleiner als die tatsächliche Länge des Drahtes 12 zwischen den Fixpunkten 22, 24. Sodann wird der Zerlegeprozess gestartet, um entweder entsprechend dem Verfahrensablauf 34 die Kolben-Zylinderanordnung 14 zu fixieren und die Kolben-Zylinderanordnung 16 entlang der Führung 28 in Richtung des Gegenstandes 10 zu verfahren. (Alternativ kann der Verfahrensablauf 34 durchgeführt werden, bei dem die Kolben-Zylinderanordnung 16 fixiert und die Kolben-Zylinderanordnung 14 verfahrbar ist. Durch den jeweils zuvor angezeigten Verfahrensschritt 36, 38 wird bei bereits erfolgter Durchführung eines Schnittes zunächst - wie anhand der Fig. 1d und 1g erläutert worden ist - die Kolben-Zylinderanordnung 14 bzw. 16 kurz angehoben, um für die Kolben-Zylinderanordnung 14, 16 eine Hubbewegung und damit das notwendige Oszillieren des Drahtes 12 zu ermöglichen.)

Bei der Fixierung der Kolben-Zylinderanordnung 14 und der Verstellbarkeit der Kolben-Zylinderanordnung 16 ist sodann eine der Kolben-Zylinderanordnungen wie die Kolben-Zylinderanordnung 14 Spannzylinder (SZ) und die andere Kolben-Zylinderanordnung 16 Arbeitszylinder (AZ). Sofern die Kolben den zum Trennen erforderlichen Hub X ausüben können, also der Hub X ungleich Null ist, erfolgt ein Umschalten der Wirkungsweisen der Kolben-Zylinderanordnung 14, 16, d. h., dass die Kolben-Zylinderanordnung 16 Spannzylinder und die Kolben-Zylinderanordnung 14 Arbeitszylinder ist. Somit wird im Flussdiagramm die Schleife 36, 38 durchlaufen. Dieses Wechseln erfolgt solange, bis der Hub X einen vorgegebenen Wert unterschritten hat, der entsprechend der Fig. 2 mit X = 0 angegeben ist. Ist dieser erreicht, erfolgt ein Umschalten der Halterungen (Umschalter Support) der Kolben-Zylinderanordnung 14, 16 derart, dass die zuvor fixierte Kolben-Zylinderanordnung 14 nach zuvor erfolgtem kurzen Anheben der zuvor freien Kolben-Zylinderanordnung 16 verfahrbar und die Kolben-Zylinderanordnung 16 fixiert ist, wie der Verfahrensstrang 40 in Fig. 2 verdeutlicht. Dieser Wechsel einerseits von fixierter Kolben-Zylinderanordnung und in Richtung der Trennlinie verstellbaren Kolben-Zylinderanordnung und andererseits der Funktion als Arbeits- und Spannzylinder erfolgt solange, bis der Gegenstand 10 zerlegt ist (Fig. 1m).

## Patentansprüche

1. Verfahren zum Zerlegen eines Gegenstandes, insbesondere kontaminierten Gegenstandes, mittels eines flexiblen Schleifelementes wie -drahts, -seils oder einer -litze, wobei das Schleifelement von zwei Antriebsaggregaten ausgeht, zwischen denen ein zu zerlegender Bereich des Gegenstandes verläuft, und wobei vor Beginn des Zerlegens zwischen von den Antriebsaggregaten ausgehenden Fixpunkten für das Schleifelement diese bei gleichsinnig in einer Endlage sich befindenden Antriebsaggregaten einen Abstand X aufweisen, der kleiner als das Schleifelement in seiner tatsächlichen Länge X + X_{S} zwischen den Fixpunkten ist, wobei zum Zerlegen des Gegenstandes folgende Verfahrensschritte durchgeführt werden:
A) Anordnen der Fixpunkte der Antriebsaggregate außerhalb des Gegenstandes derart, dass das Schleifelement in Ausgriff mit dem Gegenstand ist (Fig. 1a),
B) Fixieren des ersten Antriebsaggregats und Bewegen des zweiten Antriebsaggregats bei gleichzeitiger oszillierender Schleifbewegung des Schleifelementes in Richtung des Gegenstandes zum Ausbilden einer Fuge in diesem (Fig 1b,c),
C) bei Erreichen eines Abstandes zwischen den Fixpunkten der Antriebsaggregate derart, dass ein wirksames Oszillieren des Schleifelementes unterbunden ist, Beabstanden des zuvor in Richtung des Gegenstandes bewegten zweiten Antriebsaggregats zur Schleiflinie, Fixieren des zweiten Antriebsaggregats und Bewegen des ersten Antriebsaggregats in Richtung der Schleiflinie bei gleichzeitiger oszillierender Bewegung des Schleifelementes (Fig 1d)-g)),
D) bei erneutem Erreichen des Abstandes zwischen den Fixpunkten derart, dass ein wirksames Oszillieren des Schleifelementes unterbunden ist, Beabstanden des zuvor in Richtung des Gegenstandes bewegten ersten Antriebsaggregats zur Schleiflinie, Fixieren des ersten Antriebsaggregats und Bewegen des zweiten Antriebsaggregats in Richtung der Schleiflinie bei gleichzeitiger oszillierender Bewegung des Schleifelementes (Fig.1h)-e)),
E) Fortführen der Verfahrensschritte C) und D) bis zum gewünschten Zerlegen des Gegenstandes (Fig 1m).

2. Verfahren nach Anspruch 1,
**dadurch gekennzeichnet,**
**dass** die Antriebsaggregate entlang parallel zueinander verlaufender Führungen bewegt werden, wobei insbesondere als Antriebsaggregate Kolben-Zylinderanordnungen verwendet werden, von deren Kolben die Fixpunkte ausgehen, und dass ein Beabstanden der beim Zerlegen des Gegenstandes entlang der Führung verstellbaren Kolben-Zylinderanordnung dann erfolgt, wenn zumindest einer der Kolben der Kolben-Zylinderanordnungen einen Hub vorgegebener Länge unterschreitet.

3. Vorrichtung zum Zerlegen eines Gegenstandes (10), insbesondere kontaminierten Gegenstandes, mittels eines flexiblen Schleifelementes wie -drahts, -seils oder einer -litze (12),
**dadurch gekennzeichnet,**
**dass** die Vorrichtung zwei Kolben-Zylinderanordnungen (14, 16) umfasst, dass jede Kolben-Zylinderanordnung entlang einer Führung (18, 20) verstellbar ist, dass zwischen den Führungen bereichsweise der zu zerlegende Gegenstand (10) positioniert ist, dass jeder Kolben der Kolben-Zylinderanordnung einen Fixpunkt (22, 24) für das Schleifelement (12) aufweist, dass die Kolben gleichsinnig verstellbar sind, wobei eine Kolben-Zylinderanordnung bei einem Kolbenhub als Arbeitszylinder (AZ) und die andere Kolben-Zylinderanordnung als Spannzylinder (SZ) und bei nachfolgendem Hub als Spannzylinder bzw. Arbeitszylinder wirkt, dass der Abstand zwischen den Fixpunkten bei gleichsinnig in jeweiliger Totpunktlage angeordneten Kolben bei Ausgriff des Schleifelementes mit dem Gegenstand kleiner als das Schleifelement in seiner tatsächlichen Länge zwischen den Fixpunkten ist und dass beim Zerlegen des Gegenstandes eine der Zylinderanordnungen fixiert und die andere Kolben-Zylinderanordnung in Richtung von dem Schleifelement auszubildender Schnittlinie verstellbar ist und umgekehrt.

4. Vorrichtung nach Anspruch 3,
**dadurch gekennzeichnet,**
**dass** die Führungen (18, 20) parallel zueinander verlaufen und/oder die Zylinder-Kolbenanordnung (14, 16) druckluftbeaufschlagt oder hydraulisch betätigbar ist.

5. Vorrichtung nach einem der Ansprüche 3 oder 4,
**dadurch gekennzeichnet,**
**dass** der Hub der Kolben über Endschalter erfassbar ist.

## Claims

1. A process for decomposition of an article, especially a contaminated article, by means of a flexible grinding element such as grinding wire, rope or cable, where the grinding element begins at two drive units, between which a region, to be decomposed, of the article extends, and where before the onset of the decomposition, between fixed points for the grinding element that originate at the drive units, these points, given drive units located in the same direction in a terminal position, have a spacing X, which is less than the grinding element in its actual length X+Xₛ between the fixed points, where for decomposition of the article, the following process steps are performed:
A) disposition of the fixed points of the drive units outside the article in such a way, that the grinding element is in disengagement with the article (Fig. 1a),
B) fixation of the first drive unit and motion of the second drive unit, with a simultaneous oscillating grinding motion of the grinding element in the direction of the article, in order to form a seam therein (Fig. 1b, c),
C) upon attainment of a spacing between the fixed points of the drive units such that effective oscillation of the grinding element is prevented, spacing apart of the second drive unit, previously moved in the direction of the article, relative to the grinding line, fixation of the second drive unit and moving the first drive unit in the direction of the grinding line with a simultaneous oscillating motion of the grinding element (Fig. 1d-g),
D) upon again attaining the spacing between the fixed points such that effective oscillation of the grinding element is prevented, spacing apart of the first drive unit, previously moved in the direction of the article, from the grinding line, fixation of the first drive unit and moving the second drive unit in the direction of the grinding line, with a simultaneous oscillating motion of the grinding element (Fig. 1h-l).
E) continuation of process steps C) and D) until the desired decomposition of the article (Fig. 1m).

2. The process of claim 1,
**characterized in**
**that** the drive units are moved along guides that extend parallel to one another, where particularly as drive units piston-cylinder assemblies are used, from whose pistons the fixed points originate, and that a spacing apart of the piston-cylinder assembly, which is adjustable along the guide upon decomposition of the article, is effected whenever at least one of the pistons of the piston-cylinder assemblies undershoots a stroke of predetermined length.

3. An apparatus for the decomposition of an article (10), in particular a contaminated article, by means of a flexible grinding element such as a grinding wire, rope or cable (12),
**characterized in**
**that** the apparatus includes two piston-cylinder assemblies (14, 16), that each piston-cylinder assembly is adjustable along a guide (18, 20), that between the guides, the article (10) to be decomposed is positioned regionally, that each piston of the piston-cylinder assembly has one fixed point (22, 24) for the grinding element (12), that the pistons are adjustable in the same direction, where one piston-cylinder assembly in a piston stroke acts as a work cylinder (AZ) while the other piston-cylinder assembly acts as a clamping cylinder (SZ), and in the subsequent stroke they act as a clamping cylinder and work cylinder, respectively; that the spacing between the fixed points, given pistons each disposed in the same direction in the respective dead center position, upon disengagement of the grinding element with the article, is less than the grinding element is in its actual length between the fixed points, and that upon the decomposition of the article, one of the cylinder assemblies is fixed, while the other piston-cylinder assembly is adjustable in the direction of the cutting line to be formed by the grinding element, and vice versa.

4. The apparatus of claim 3,
**characterized in**
**that** the guides (18, 20) extend parallel to one another and/or the piston-cylinder assembly (14, 16) is acted upon by pressure or is actuatable hydraulically.

5. The apparatus of one of the claims 3 or 4,
**characterized in**
**that** the stroke of the pistons is detectable via end switches.

## Revendications

1. Procédé de découpe d'une pièce notamment d'une pièce contaminée à l'aide d'un élément de meulage souple tel qu'un fil, un câble ou un cordon, l'élément de meulage venant de deux unités d'entraînement entre lesquelles se trouve la zone de la pièce à découper et avant le début de la découpe, les points fixes partant des unités d'entraînement de l'élément de meulage, lorsque les unités d'entraînement se trouvent dans le même sens dans une position de fin de course, ces points sont à une distance X inférieure à la longueur effective X + Xₛ de l'élément de meulage entre les points fixes, selon lequel pour découper la pièce on exécute les étapes suivantes :
A) disposition des points fixes des unités d'entraînement à l'extérieur de la pièce de façon que l'élément de meulage soit hors de prise de la pièce (figure 1a),
B) blocage de la première unité d'entraînement et déplacement de la seconde unité d'entraînement tout en effectuant un mouvement de meulage oscillant avec l'élément de meulage en direction de la pièce pour réaliser une fente dans celle-ci (figures 1b, c),
C) lorsqu'on atteint une distance entre les points fixes des unités d'entraînement telle que l'élément de meulage ne peut plus osciller efficacement, on écarte la seconde unité d'entraînement par rapport à la ligne de meulage, unité qui a été préalablement déplacée en direction de la pièce, on bloque la seconde unité d'entraînement et on déplace la première unité d'entraînement en direction de la ligne de meulage tout en effectuant un mouvement oscillant avec l'élément de meulage (figures 1d-g),
D) lorsqu'on atteint de nouveau une distance entre les points fixes telle qu'il n'y a plus de mouvement oscillant pour l'élément de meulage, on écarte la première unité d'entraînement qui a été préalablement déplacée en direction de la pièce, par rapport à la ligne de meulage, on bloque la première unité d'entraînement et on déplace la seconde unité d'entraînement en direction de la ligne de meulage tout en effectuant un mouvement oscillant avec l'élément de meulage (figure 1h-l),
E) on poursuit les étapes C) et D) jusqu'à la découpe souhaitée de la pièce (figure 1m).

2. Procédé selon la revendication 1,
**caractérisé en ce qu'**
on déplace les unités d'entraînement le long de trajectoires parallèles, et en particulier on utilise comme unités d'entraînement des vérins dont les pistons partent des points fixes, et lors de la découpe de la pièce on écarte le vérin réglable le long du guidage si au moins l'un des pistons des vérins exécute une course inférieure à une longueur prédéfinie.

3. Dispositif pour découper une pièce (10), notamment une pièce contaminée, à l'aide d'un élément de meulage souple tel qu'un câble, un fil ou un cordon (12),
**caractérisé en ce que**
le dispositif comporte deux vérins (14, 16), chaque vérin étant réglable le long d'un guide (18, 20), entre les guides on peut positionner par zones la pièce (10) à découper, chaque piston de vérin comporte un point fixe (22, 24) pour l'élément de meulage (12), les pistons sont réglables dans le même sens, un vérin fonctionnant comme vérin actif (AZ) pour une course de piston et l'autre vérin fonctionnant comme le vérin de serrage (SZ) et lors de la course suivante il fonctionne comme vérin de serrage ou vérin actif, la distance entre les points fixes pour des pistons prévus dans une position de point mort respective, dans le même sens, lors du dégagement de l'élément de meulage par rapport à la pièce, est inférieure à la longueur effective de l'élément de meulage entre les points fixes, et lors de la découpe de la pièce, on fixe l'un des vérins et on déplace l'autre vérin dans la direction de la ligne de coupe à réaliser par l'élément de meulage et inversement.

4. Dispositif selon la revendication 3,
**caractérisé en ce que**
les guides (18, 20) sont parallèles et/ou les vérins (14, 16) sont des vérins à air comprimé ou des vérins hydrauliques.

5. Dispositif selon l'une des revendications 3 ou 4,
**caractérisé en ce que**
la course des pistons est détectée par des commutateurs de fin de course.
